# EUROPEAN PATENT SPECIFICATION

(11) **EP 3 029 314 B1**
(45) Date of publication and mention of the grant of the patent: **07.09.2022**
(21) Application number: 15197212.2
(22) Date of filing: 01.12.2015
(51) Int. Cl.: F03D 1/06, B29C 70/52, B29D 99/00, B29L 31/08, B32B 3/06

(54) **PULTRUDED ROTOR BLADE COMPONENTS HAVING INTERLOCKING EDGES**
PULTRUDIERTE ROTORBLATTKOMPONENTEN MIT INEINANDERGREIFENDEN KANTEN
COMPOSANTS DE PALE DE ROTOR PULTRUDÉE PRÉSENTANT DES ARÊTES TERMINALES S'INTERPÉNÉTRANT

(30) Priority: 04.12.2014 US 201414560266
(43) Date of publication of application: 08.06.2016
(73) Proprietor: General Electric Company, Schenectady, NY 12345 (US)
(72) Inventor: GEIGER, Shannon B., Greenville, SC South Carolina 29615 (US); CARUSO, Christopher Daniel, Greenville, SC South Carolina 29615 (US); YARBROUGH, Aaron A., Greenville, NY New York 29615 (US)
(74) Representative: ZBM Patents - Zea, Barlocci & Markvardsen

(56) References cited:
- EP-A1- 2 682 256
- WO-A1-2015/142904
- DK-A- 200 801 457
- NL-A- 8 104 019
- US-A1- 2008 206 059
- US-A1- 2009 068 017
- US-A1- 2013 333 823
- US-A1- 2014 003 956
- US-A1- 2014 154 091
- US-A1- 2014 271 217
- US-A1- 2014 301 859

## Description

The present subject matter relates generally to rotor blades of a wind turbine and, more particularly, to pultruded rotor blade components having interlocking edges.

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine rotor blades generally include a body shell formed by two shell halves of a composite laminate material. The shell halves are generally manufactured using molding processes and then coupled together along the corresponding ends of the rotor blade. In general, the body shell is relatively lightweight and has structural properties (e.g., stiffness, buckling resistance and strength) which are not configured to withstand the bending moments and other loads exerted on the rotor blade during operation. In addition, wind turbine blades are becoming increasingly longer in order to produce more power. As a result, the blades must be stiffer and thus heavier so as to mitigate loads on the rotor.

To increase the stiffness, buckling resistance and strength of the rotor blade, the body shell is typically reinforced using one or more structural components (e.g. opposing spar caps with a shear web configured therebetween) that engage the inner surfaces of the shell halves. The spar caps may be constructed of various materials, including but not limited to glass fiber laminate composites and/or carbon fiber laminate composites. Such materials, however, can be difficult to control, defect prone, and/or highly labor intensive due to handling of the dry and pre-preg fabrics and the challenges of infusing large laminated structures.

As such, modern spar caps can be constructed of pre-fabricated, pre-cured (i.e. pultruded) composites that can be produced in thicker sections, and are less susceptible to defects. Accordingly, the pultruded composites can eliminate various concerns and challenges associated with using dry fabric alone. As used herein, the terms "pultruded composites," "pultrusions," "pultruded members" or similar generally encompass reinforced materials (e.g. fibers or woven or braided strands) that are impregnated with a resin and pulled through a stationary die such that the resin cures or undergoes polymerization through added heat or other curing methods. As such, the process of manufacturing pultruded composites is typically characterized by a continuous process of composite materials that produces composite parts having a constant cross-section. A plurality of pultrusions can then be joined together to form the spar caps and/or various other rotor blade components.

The documents US 2013/333823 A1, US 2014/301859 A1, and NL 8104019 A disclose rotor blade components for a wind turbine.

Accordingly, the art is continuously seeking new and improved methods of manufacturing rotor blade components, such as the spar caps, using pultruded members. More specifically, methods of manufacturing rotor blade components having interlocking pultrusions would be advantageous.

Various aspects and advantages of the invention will be set forth in part in the following description, or may be clear from the description.

The present invention is defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to the present disclosure;
FIG. 2 illustrates a perspective view of one of the rotor blades of FIG. 1;
FIG. 3 illustrates a cross-sectional view of the rotor blade of FIG. 2 along line 3-3;
FIG. 4 illustrates a cross-sectional view of a pultruded spar cap;
FIG. 5 illustrates a cross-sectional view of one of the pultruded members of the spar cap of FIG. 4;
FIG. 6 illustrates a cross-sectional view of one embodiment of a pultruded spar cap according to the present disclosure;
FIG. 7 illustrates cross-sectional views of further embodiments of spar caps according to the present disclosure, particularly illustrating single, separate pultruded members that each form a layer of the spar cap;
FIG. 8 illustrates cross-sectional views of various embodiments in Figures 8(A), 8(B) and 8(C) of interlocking components configured to form one or more layers of a pultruded spar cap according to the present disclosure;
FIG. 9 illustrates cross-sectional views of various embodiments of interlocking components and layers configured to form a pultruded spar cap according to the present disclosure; and
FIG. 10 illustrates a flow diagram of a method of manufacturing rotor blade components according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present subject matter is directed to improved pultruded rotor blade components for a wind turbine and methods of manufacturing same. For example, in one embodiment, the rotor blade component includes a plurality of pultruded members arranged in two or more layers. Each of the pultruded members are constructed of a plurality of fibers cured together via a resin material. During the pultrusion process, the components are molded and cured to include one or more interlocking edges. Thus, the pultruded members can be arranged in two or more layers and interconnected and self-aligned with adjacent pultruded members via corresponding interlocking edges.

The present disclosure provides many advantages not present in the prior art. For example, the rotor blade components of the present disclosure are less prone to defects and have known material properties. Further, since the rotor blade components are pre-cured, wrinkling and dis-bonding of the layers are reduced and/or eliminated. In addition, because the rotor blade components are designed to a known height as defined by the heated die, the pultruded member thickness tolerance and stack-up can be more tightly controlled, thereby reducing cycle time for the manufacturing process.

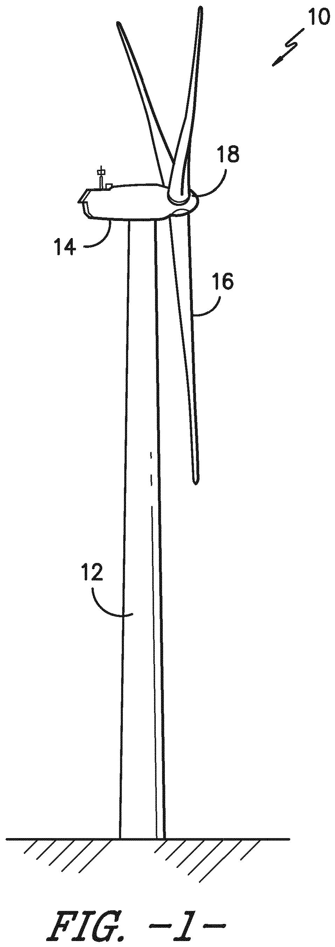

Referring now to the drawings, FIG. 1 illustrates a perspective view of a horizontal axis wind turbine 10. It should be appreciated that the wind turbine 10 may also be a vertical-axis wind turbine. As shown in the illustrated embodiment, the wind turbine 10 includes a tower 12, a nacelle 14 mounted on the tower 12, and a rotor hub 18 that is coupled to the nacelle 14. The tower 12 may be fabricated from tubular steel or other suitable material. The rotor hub 18 includes one or more rotor blades 16 coupled to and extending radially outward from the hub 18. As shown, the rotor hub 18 includes three rotor blades 16. However, in an alternative embodiment, the rotor hub 18 may include more or less than three rotor blades 16. The rotor blades 16 rotate the rotor hub 18 to enable kinetic energy to be transferred from the wind into usable mechanical energy, and subsequently, electrical energy. Specifically, the hub 18 may be rotatably coupled to an electric generator (not illustrated) positioned within the nacelle 14 for production of electrical energy.

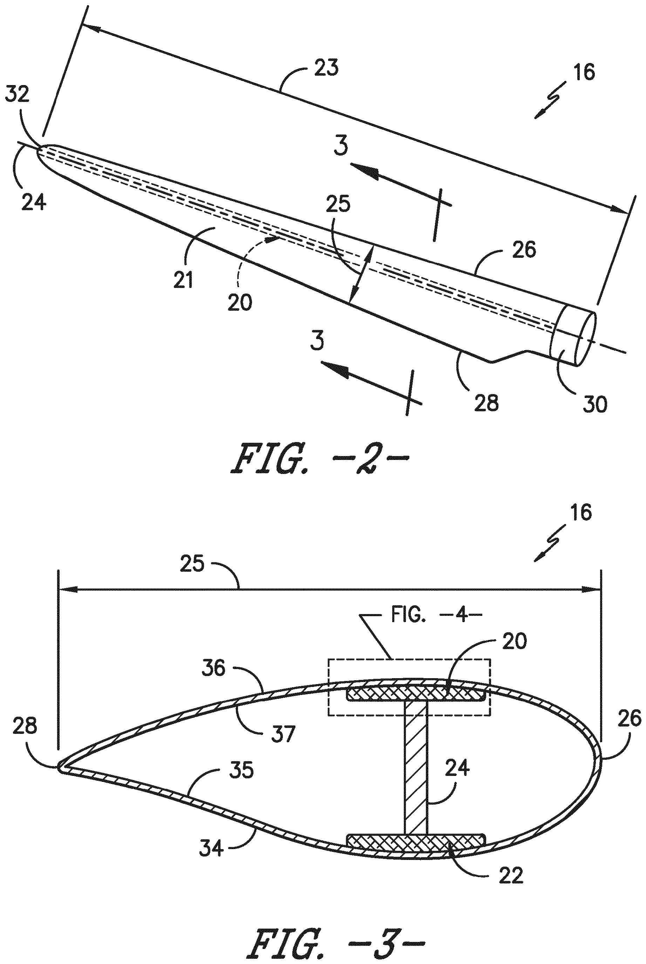

Referring to FIGS. 2 and 3, one of the rotor blades 16 of FIG. 1 is illustrated in accordance with aspects of the present subject matter. In particular, FIG. 2 illustrates a perspective view of the rotor blade 16, whereas FIG. 3 illustrates a cross-sectional view of the rotor blade 16 along the sectional line 3-3 shown in FIG. 2. As shown, the rotor blade 16 generally includes a blade root 30 configured to be mounted or otherwise secured to the hub 18 (FIG. 1) of the wind turbine 10 and a blade tip 32 disposed opposite the blade root 30. A body shell 21 of the rotor blade generally extends between the blade root 30 and the blade tip 32 along a longitudinal axis 27. The body shell 21 may generally serve as the outer casing/covering of the rotor blade 16 and may define a substantially aerodynamic profile, such as by defining a symmetrical or cambered airfoil-shaped cross-section. The body shell 21 may also define a pressure side 34 and a suction side 36 extending between leading and trailing ends 26, 28 of the rotor blade 16. Further, the rotor blade 16 may also have a span 23 defining the total length between the blade root 30 and the blade tip 32 and a chord 25 defining the total length between the leading edge 26 and the trialing edge 28. As is generally understood, the chord 25 may generally vary in length with respect to the span 23 as the rotor blade 16 extends from the blade root 30 to the blade tip 32.

In several embodiments, the body shell 21 of the rotor blade 16 may be formed as a single, unitary component. Alternatively, the body shell 21 may be formed from a plurality of shell components. For example, the body shell 21 may be manufactured from a first shell half generally defining the pressure side 34 of the rotor blade 16 and a second shell half generally defining the suction side 36 of the rotor blade 16, with such shell halves being secured to one another at the leading and trailing ends 26, 28 of the blade 16. Additionally, the body shell 21 may generally be formed from any suitable material. For instance, in one embodiment, the body shell 21 may be formed entirely from a laminate composite material, such as a carbon fiber reinforced laminate composite or a glass fiber reinforced laminate composite. Alternatively, one or more portions of the body shell 21 may be configured as a layered construction and may include a core material, formed from a lightweight material such as wood (e.g., balsa), foam (e.g., extruded polystyrene foam) or a combination of such materials, disposed between layers of laminate composite material.

Referring particularly to FIG. 3, the rotor blade 16 may also include one or more longitudinally extending structural components configured to provide increased stiffness, buckling resistance and/or strength to the rotor blade 16. For example, the rotor blade 16 may include a pair of longitudinally extending spar caps 20, 22 configured to be engaged against the opposing inner surfaces 35, 37 of the pressure and suction sides 34, 36 of the rotor blade 16, respectively. Additionally, one or more shear webs 24 may be disposed between the spar caps 20, 22 so as to form a beam-like configuration. The spar caps 20, 22 may generally be designed to control the bending stresses and/or other loads acting on the rotor blade 16 in a generally spanwise direction (a direction parallel to the span 23 of the rotor blade 16) during operation of a wind turbine 10. Similarly, the spar caps 20, 22 may also be designed to withstand the spanwise compression occurring during operation of the wind turbine 10.

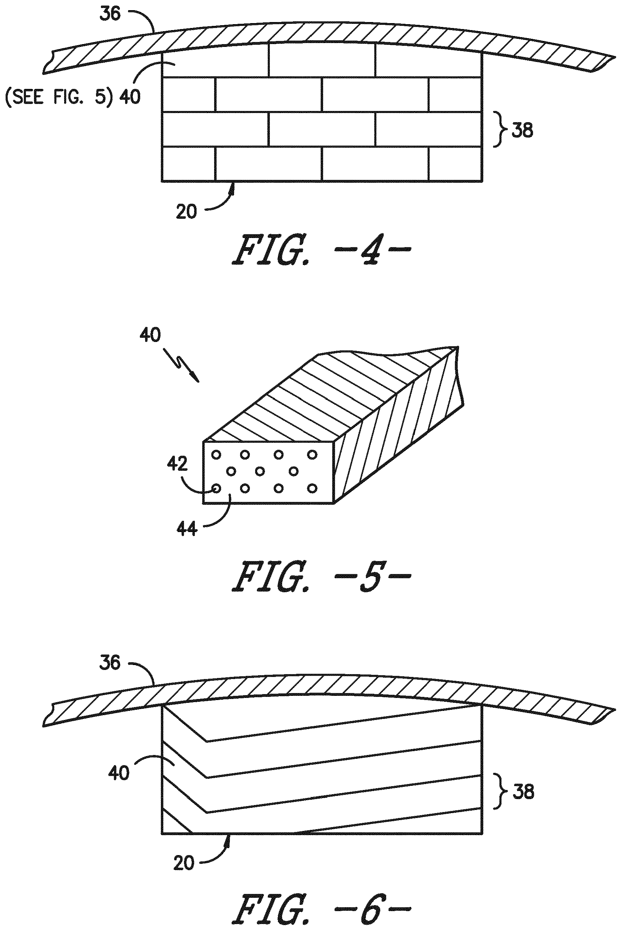

Referring now to FIG. 4, a cross-sectional view of a spar cap 20 constructed of a plurality of pultruded members 40 arranged in layers 38. In addition, FIG. 5 illustrates a detailed, cross-sectional view of one of the pultruded members 40 of FIG. 4. As shown in FIG. 4, the pultruded members 40 are aligned side-by-side to form a single layer 38. The layers 38 are then stacked atop one another and joined together, for example, by vacuum infusion or any other suitable method. As shown in FIG. 5, each of the pultruded members 40 are constructed of a plurality of fibers 42 (e.g. fibers, fiber bundles, and/or woven, braided, or veil fabrics) joined together with a cured resin material 44. More specifically, the fibers 42 may include glass fibers, carbon fibers, or any other suitable fiber materials. Further, the resin material 44 may include any suitable resin, including but not limited to polyester, polyurethane, polybutylene terephthalate (PBT), polyethylene terephthalate (PET), vinylester, epoxy, or similar. It should be understood that the pultruded members 40 of the present disclosure are pre-cured, pre-fabricated components manufactured using any suitable methods known in the art. Thus, in accordance with certain aspects of the present disclosure, a plurality of pultruded members 40 can be then joined together to form the spar cap 20. More specifically, the pultruded members may be joined and/or secured together via vacuum infusion, adhesive, semi-preg material, pre-preg material.

Referring now to FIGS. 6-9, further embodiments of pultruded members 40 for use in constructing rotor blade components (e.g., spar caps) according to the present disclosure are illustrated. More specifically, the pultruded members 40 include one or more interlocking edges 50 having a predetermined geometry. Thus, adjacent pultruded members 40 may be connected or self-aligned via corresponding interlocking edges 50. For example, as shown in FIG. 6, one embodiment of a spar cap 20 having interlocking pultruded members 40 according to the present disclosure is illustrated. More specifically, in the illustrated embodiment, the spar cap 20 includes single-component layers 38, i.e. the pultruded members 40 make up the entire thickness of each layer 38. Further, each of the interlocking pultruded members 40 may include a substantially chevron or V-shape cross-section that self-aligns with an adjacent component 40 and/or layer 38. Once the pultruded members 40 and/or layers 38 are arranged, the components 40 can be joined together, for example, by vacuum infusion or by applying adhesive between the components 40 and/or layers 38.

The pultruded members 40 may be manufactured using any suitable method for manufacturing pre-cured, pre-fabricated parts known in the art. For example, in a particular embodiment, as mentioned multiple fibers may be impregnated with a resin material. The impregnated fibers may then be cured so as to form the pultruded members 40. More specifically, the impregnated fibers may be cured and formed by heating the fibers in a heated die. For example, in certain embodiments, the heated die may include a mold cavity corresponding to the shape of the interlocking edges 50 such that the mold cavity forms the desired shape in the completed part. The pultruded members 40 are then arranged such that adjacent members 40 self-align with each other. In addition, after self-aligning the pultruded members 40, the connected layers 38 may be secured together to form the rotor blade component, e.g. via vacuum infusing or bonding the components and/layers together via an adhesive, a semi-preg material, and/or a pre-preg material.

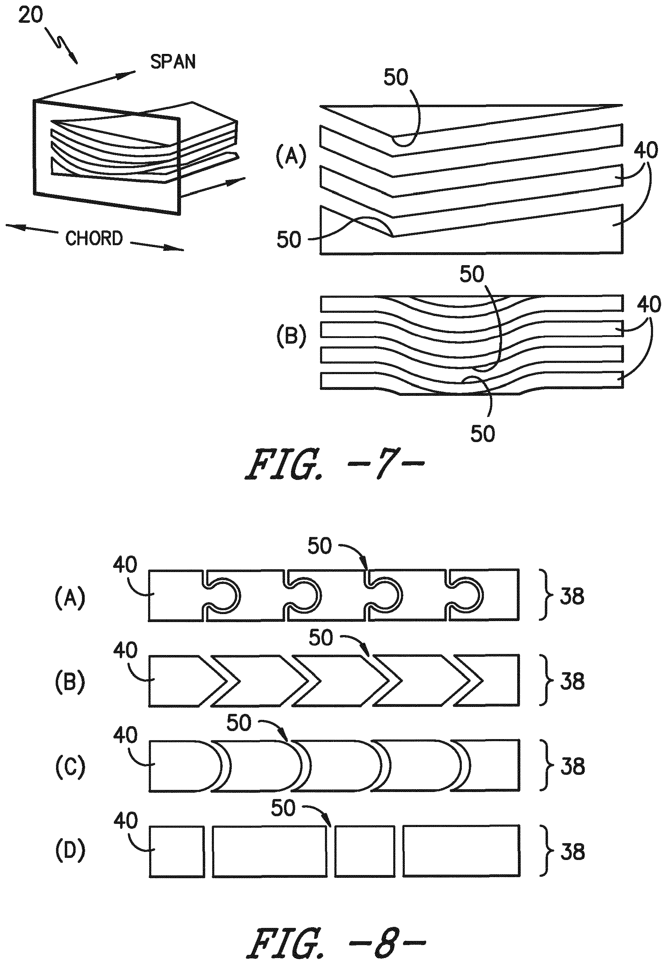

Referring particularly to FIG. 7, a more detailed view of various spar caps 20 according to the present disclosure is illustrated. More specifically, a perspective view of a spar cap 20 is shown illustrating the span and chord directions, as well as multiple cross-sectional views of the spar cap 20 illustrating different embodiments of the arranged pultruded members 40 having interlocking edges 50. For example, FIG. 7(A) illustrates the embodiment of FIG. 6 with space between each of the pultruded members 40 to further depict the interlocking edges 50, whereas FIG. 7(B) illustrates another embodiment of the pultruded members 40 having arcuate or rounded interlocking edges 50. It should be understood that the interlocking edges 50 may have any suitable cross-sectional shape that allows the pultruded members 40 to self-align and interconnect with each other. For example, as generally shown in the figures, the interlocking edges 50 of the pultruded members 40 may have any of the following cross-sectional shapes: dovetail, arcuate, V-shaped, U-shaped, or ball joint.

Therefore, it should be understood that the embodiments illustrated in the figures are illustrated for example purposes only and are not meant to be limiting.

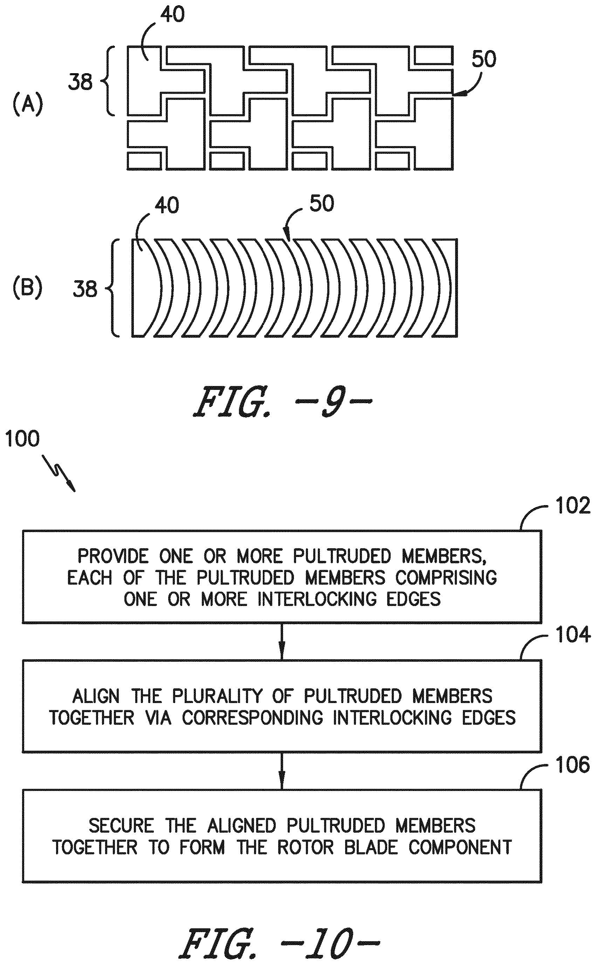

In addition, as shown in FIGS. 8 and 9, the interlocking edges 50 of the pultruded members 40 correspond to interlocking side edges (FIGS. 8(A), 8(B), 8(C), and 9(B) of the pultruded members 40 and to interlocking top and bottom edges (FIGS. 7(A) and 7(B) of the pultruded members 40.

It should also be understood that the pultruded members 40 as described herein may be used to construct various other rotor blade components, in addition to the spar cap 20. For example, in certain embodiments, the pultruded members 40 may be used to construct the shear web 24, a root ring, or any other rotor blade component that can benefit from being constructed of a pultruded parts as described herein.

The present disclosure is also directed to methods for manufacturing rotor blade components as described herein. For example, as shown in FIG. 10, a flow diagram of a method 100 of manufacturing a rotor blade component of a wind turbine is disclosed. At 102, the method 100 includes providing one or more pultruded members, each of the pultruded members having one or more interlocking edges. Another step 104 includes aligning the plurality of pultruded members together via corresponding interlocking edges. The method 100 also includes securing the aligned pultruded members together to form the rotor blade component (step 106).

This written description uses examples to disclose the invention, including the preferred mode, and also to enable any person skilled in the art to practice the invention. The claims.

## Claims

1. A rotor blade component for a wind turbine (10), the rotor blade component comprising:
a plurality of pultruded members (40) arranged in two or more layers (38), each of the pultruded members (40) constructed of a plurality of fibers (42) joined together via a cured resin material (44),
wherein each of the plurality of pultruded members (40) comprises one or more interlocking edges (50), and wherein adjacent pultruded members (40) are aligned and interconnected together via corresponding interlocking edges (50), wherein adjacent pultruded members (40) of one layer (38) are aligned and interconnected together via corresponding interlocking side edges, wherein adjacent pultruded members (40) of different layers (38) are aligned and interconnected together via corresponding interlocking top and bottom edges, wherein both the interlocking side edges (50) and the interlocking top and bottom edges (50) comprise at least one of the following cross-sectional shapes: dovetail, arcuate, V-shaped, U-shaped, or ball joint.

2. The rotor blade component (20) of claim 1, wherein the rotor blade component comprises at least one of a spar cap (20), a shear web (24), or a root ring.

3. The rotor blade component (20) of any preceding claim, wherein the aligned pultruded members (40) are further joined together via at least one of vacuum infusion, an adhesive, a pre-preg material, or a semi-preg material.

4. A rotor blade (16) of a wind turbine (10), the rotor blade comprising:
a blade root (30) and a blade tip (32);
a leading edge (26) and a trailing edge (28);
a suction side (36) and a pressure side (34); and,
at least one spar cap (20) configured on an internal surface of either or both of the pressure or suction sides (34, 36), the spar cap (20) comprising a rotor blade component as defined by any of the preceding claims.

5. A method of manufacturing a rotor blade component of a wind turbine (10) according to claim 1, the method comprising:
providing a plurality of pultruded members (40), each of the pultruded members (40) comprising one or more interlocking edges (50);
aligning the plurality of pultruded members (40) together via corresponding interlocking edges (50); and
securing the aligned pultruded members (40) together to form the rotor blade component.

## Patentansprüche

1. Ein Rotorblattbauteil für eine Windturbine (10), wobei das Rotorblattbauteil Folgendes umfasst:
eine Vielzahl von pultrudierten Elementen (40), die in zwei oder mehreren Schichten (38) angeordnet sind, wobei jedes der pultrudierten Elemente (40) aus einer Vielzahl von Fasern (42) aufgebaut ist, die über ein gehärtetes Harzmaterial (44) miteinander verbunden sind,
wobei jedes von der Vielzahl von pultrudierten Elementen (40) eine oder mehrere ineinandergreifende Kanten (50) umfasst, und wobei benachbarte pultrudierte Elemente (40) über entsprechende ineinandergreifende Kanten (50) miteinander ausgerichtet und verbunden sind, wobei benachbarte pultrudierte Elemente (40) einer Schicht (38) über entsprechende ineinandergreifende seitliche Kanten miteinander ausgerichtet und verbunden sind, wobei benachbarte pultrudierte Elemente (40) verschiedener Schichten (38) über entsprechende ineinandergreifende obere und untere Kanten miteinander ausgerichtet und verbunden sind, wobei sowohl die ineinandergreifenden seitlichen Kanten (50) als auch die ineinandergreifenden oberen und unteren Kanten (50) mindestens eine von den folgenden Querschnittsformen umfassen: schwalbenschwanzförmig, bogenförmig, V-förmig, U-förmig oder kugelgelenkförmig.

2. Das Rotorblattbauteil (20) von Anspruch 1, wobei das Rotorblattbauteil wenigstens einen von einem Holmgurt (20), einem Schersteg (24) oder einem Wurzelring umfasst.

3. Das Rotorblattbauteil (20) von einem der vorhergehenden Ansprüche, wobei die ausgerichteten pultrudierten Elemente (40) ferner über mindestens eines von Vakuuminfusion, einem Klebstoff, einem Prepreg-Material oder einem Semipreg-Material miteinander verbunden sind.

4. Ein Rotorblatt (16) einer Windturbine (10), wobei das Rotorblatt Folgendes umfasst:
einen Blattwurzel (30) und eine Blattspitze (32);
eine Vorderkante (26) und eine Hinterkante (28);
eine Ansaugseite (36) und eine Druckseite (34); und,
mindestens einen Holmgurt (20), der auf einer inneren Fläche von einer oder beiden der Druck- oder Ansaugseiten (34, 36) konfiguriert ist, wobei der Holmgurt (20) ein Rotorblattbauteil wie in einem der vorhergehenden Ansprüche definiert umfasst.

5. Ein Verfahren zum Herstellen eines Rotorblattbauteils einer Windturbine (10) nach Anspruch 1, wobei das Verfahren Folgendes umfasst:
Bereitstellen einer Vielzahl von pultrudierten Elementen (40), wobei jedes der pultrudierten Elemente (40) eine oder mehrere Verriegelungskanten (50) umfasst;
Ausrichten der Vielzahl von pultrudierten Elementen (40) aneinander über entsprechende Verriegelungskanten (50); und
Befestigen der ausgerichteten pultrudierten Elemente (40) aneinander, um das Rotorblattbauteil zu bilden.

## Revendications

1. Un composant de pale de rotor pour une éolienne (10), le composant de pale de rotor comprenant :
une pluralité d'éléments pultrudés (40) agencés en deux ou plusieurs couches (38), chacun des éléments pultrudés (40) étant constitué d'une pluralité de fibres (42) reliées à travers un matériau de résine durcie (44),
dans lequel chacun de la pluralité d'éléments pultrudés (40) comprend un ou plusieurs bords de verrouillage (50), et dans lequel des éléments pultrudés adjacents (40) sont alignés et interconnectés à travers des bords de verrouillage correspondants (50), dans lequel des éléments pultrudés adjacents (40) d'une couche (38) sont alignés et interconnectés à travers des bords latéraux de verrouillage correspondants, dans lequel des éléments pultrudés adjacents (40) de différentes couches (38) sont alignés et interconnectés à travers des bords supérieur et inférieur de verrouillage correspondants, dans lequel tant les bords latéraux de verrouillage (50) que les bords supérieur et inférieur de verrouillage (50) comprennent au moins l'une des formes de section transversale suivantes : queue d'aronde, arquée, en forme de V, en forme de U ou à rotule.

2. Le composant de pale de rotor (20) de la revendication 1, dans lequel le composant de pale de rotor comprend au moins l'un d'un capuchon de longeron (20), une âme de cisaillement (24) ou un anneau de racine.

3. Le composant de pale de rotor (20) selon l'une quelconque des revendications précédentes, dans lequel les éléments pultrudés alignés (40) sont reliés à travers au moins l'un des suivants : infusion sous vide, un adhésif, un matériau préimpregné, ou un matériau semi-imprégné.

4. Une pale de rotor (16) d'une éolienne (10), la pale de rotor (16) comprenant :
une pale de rotor (30) et une pointe de pale (32) ;
un bord d'attaque (26) et un bord de fuite (28) ;
un côté aspiration (36) et un côté pression (34) ; et
au moins un capuchon de longeron (20) configuré sur une surface interne de l'un ou des deux côtés pression ou aspiration (34, 36), le capuchon de longeron (20) comprenant un composant de pale de rotor tel que défini dans l'une quelconque des revendications précédentes.

5. Un procédé de fabrication d'un composant de pale de rotor d'une éolienne (10) selon la revendication 1, le procédé comprenant :
fournir une pluralité d'éléments pultrudés (40), chacun des éléments pultrudés (40) comprenant un ou plusieurs bords de verrouillage (50) ;
aligner la pluralité d'éléments pultrudés (40) à travers des bords de verrouillage correspondants (50); et
fixer les éléments pultrudés alignés (40) pour former le composant de pale de rotor.
